Europäisches Patentamt

European Patent Office

Office européen des brevets

(19)

(11) Publication number: **0 160 712**

**A1**

(12)

# EUROPEAN PATENT APPLICATION

(21) Application number: **84104965.3**

(22) Date of filing: **03.05.84**

(51) Int. Cl.⁴: **A 01 M 1/10**
**A 01 M 1/02**

(43) Date of publication of application:
**13.11.85 Bulletin 85/46**

(84) Designated Contracting States:
**BE DE FR GB NL SE**

(71) Applicant: **Montedison S.p.A.**
**31, Foro Buonaparte**
**I-20121 Milan(IT)**

(72) Inventor: **Caprioli, Vincenzo**
**8, via Loriga**
**S. Martino (Pavia)(IT)**

(72) Inventor: **Capizzi, Amedeo**
**50, via Solari**
**Milano(IT)**

(74) Representative: **Weinhold, Peter, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Siegfriedstrasse 8**
**D-8000 München 40(DE)**

(54) **Highly efficient traps for the capture of insects.**

(57) There are described traps for the capture of insects, of the type comprising a capturing chamber with a funnel-shaped closure, the efficiency of which is increased by a polytetrafluoroethylene coating of the inner walls of the funnel. Said traps, which may be baited either by pherohormone dispensers or by a phagoattracting agent, may be used both for the assessment of the insect population density in a determined area, and for the capture of insects in bulk.

EP 0 160 712 A1

The present invention concerns traps for capture of insects, and more particularly it concerns traps of high efficiency for the capture of insects, which traps may be used both for a monitoring action on the population of insects in a particularly defined area and for the capture of insects in bulk.

The capture of insects with traps in a technique that is spreading increasingly due to the extreme versatility of the results that may be obtained.

In fact, it is possible, by suitably positioning an adequate number of traps in a determined area, to follow the development and degree of an infestation (monitoring action) and to intervene as the proper moment, and only if necessary, with conventional insecticides, thereby obtaining a considerable economical saving and the protection of the environment.

Moreover, it is possible, still with the help of traps, to carry out the capture of insects in bulk, thus succeeding in lowering the number of individuals in a certain area, and thereby reducing the damages caused by the infestation.

In both types of application, the insect is induced to approach and enter the trap by a seductive bait that may be of various kinds.

The main types of usable baits are substances of an alimentary character (phagoattractive agents) and sexual pherohormones.

The traps of widest use may be grouped in three main categories:

glue traps consisting of a chamber provided with orifices the inside walls of which are coated with a glue capable of immobilizing the insects that settle down on it. This type of trap, in general, is provided with a pherohormone as an attracting agent and is mainly used for monitoring actions;

water traps, consisting of a vessel containing an aqueous solution of surfactant, with a wide liquid surface open to air. The insect is enticed by a pherohormone contained in a dispenser suspended above the surface of the water. This type of trap is chiefly used for massive captures;

funnel-shaped traps, consisting of a truncated cone or funnel-shaped section of plastic material, in a vertical position and with the aperture of smaller diameter directed downwards and communicating with either a rigid or a soft removable capturing chamber.

The insect may be attracted towards the latter type of trap either by a pherohormone contained in a dispenser suspended inside and immediately above the funnel entrance, or by a phagoattracting agent placed inside the chamber which communicates with the inlet funnel. This type of trap is suitable both for a monitoring action and for the massive capture of insects.

Illustrations of water traps and funnel-shaped traps with a soft chamber are shown in the work by M. Kehat & S. Greenberg in: "Phytoparasitica 6(2)", pages 79-83 (1978).

As mentioned above, the funnel-shaped traps consist of a funnel-shaped entrance or inlet of plastic material (in general polyethylene) placed vertically with respect to the aperture of smaller diameter communicating with the rigid catching or capturing chamber (for instance a bottle of plastic material) or with a soft catching chamber (for instance a bag made of polyethylene).

Once the insect has entered the trap through the funnel, it becomes very difficult for it to find its way out again, especially so when the walls of the catching chamber are transparent to light and also because in general the end of the funnel extends deep into the inside of the chamber.

If desired, it is moreover possible, but in general not necessary, to place, inside the chamber, an aqueous solution of a surfactant or an insecticide.

In order to increase (boost) the efficiency of this type of traps, it is important that the insect does not cling to the walls of the funnel and that, once settled, it will slip along the inside of the funnel to fall into the capturing chamber.

The legs of many species of insects are provided with microscopical hooks with which the insect easily clings to a surface. For instance the insects of the species _Spodoptera littoralis_ remain attached to a polyethylene surface also when this latter is inclined (titled) up to 90°.

Consequently, in funnel-shaped traps the walls of which have a slant of between about 30° and about 60°, some insects cling to the walls without slippping down into the capturing chamber. Consequently, the effectiveness of the trap is impaired.

In order to obviate this drawback, at least in part, it has been suggested by A. Navon (Phytoparasitica 6(1), pages 21-24 (1978)) to deposit on the internal walls of the funnel a thin layer of kaolin or talc. The particles of said substance will adhere to the legs of the insects thereby reducing their clinging capacity (rendering it less effective).

This solution, which increases the number of insects captured with respect to identical traps not coated with talc or kaolin is, however, not very useful over long stretches of time.

In fact, the talc or kaolin coating is easily removed and carried away by the mechanical action of winds and by rain and even by the condensed humidity.

The small roof that often is placed above the funnel entrance, also as a point of suspension for the pherohormone dispenser, is not sufficient to prevent the washing out action. Moreover, the talc or kaolin coating did not prove useful for the capture of small-sized insects such as, for instance, microleptidocters.

We have now found that the efficiency of the funnel type traps can be boosted by coating the inside wall of the funnel with polytetrafluoroethylene and that said coating proves more effective than talc or kaolin in hindering the insects from climbing along the walls of the funnel. Moreover, the polytetrafluoroethylene coating maintains its efficacy over long periods of time inasmuch as it will not be washed away by water while being resist ant to the removing action of the wind and to the rubbing action of the insects' legs.

Thus, an object of this invention is to provide a trap for insects consisting of an entrance of plastic material of a truncated-cone or funnel shape, arranged vertically with the aperture of smaller diameter turned downwards and communicating with a catching chamber of either rigid or soft material, suitably fitted with an enticing substance such as pherohormone or a phagoattracting agent, possibly also containing, in the catching chamber, as insecticide and/or an aqueous solution of a surfactant, and characterized in that the inside wall of the funnel entrance is uniformly coated with polytetrafluoroethylene.

A further object of this invention is that of using the traps according to the main object of this invention for a monitoring action on the course and degree of the infestation or for effecting the capture or catching in bulk (massive capture) of insects in a specific area.

The preparation of polytetrafluoroethylene-coated funnels is carried out either by spraying or by brushing, using an aqueous dispersion of the polymer, as described hereinbelow.

If desired, it is also possible to coat the funnel by dipping it into the coating dispersion. The polytetrafluoroethylene is readily available commercially in the form of an aqueous dispersion of particles with a granulometric distribution comprised between 0.2 and 0.4 microns.

These suspensions, in general, consist of 50-61% by weight of polymer and of 2.5-4% by weight of a non-ionic dispersant, the rest being water. The dispersion in general contains ammonia and has a basic pH of 8 to 10.

These commercial dispersions may be directly used as such for coating the entrance funnels of the traps according to this invention.

When the application is carried out by brushing, it may be convenient to add to the dispersion a minor quantity of glue (for instance 3-5% by weight) such as, for instance, polyvinylacetate, in order to improve the consistency of the deposited coat.

The traps according to this invention are suitable for use in the capture of different species of flying insects, among which there may be cited, as examples: Musca domestica, Cossus cossus, Autographa gamma, Lobesia botrana, Cydia molesta, Epychoristodes acerbella, Spodoptera littoralis, Ephestia spp., Plodia interpunctella, Thaumetopoea pityocampa, Heliothis spp., Pectinophora gossipiella, Eupoecilia ambiguella.

The traps according to this invention are suitably dimensioned in relationship to the size of insect to be captured. For instance, for the capture of insects of Cydia molesta (mean wing span: 11 mm) useful traps have an entrance or inlet funnel with the upper aperture or inlet showing a diameter of 10 cm and the lower aperture a diameter of 2.2 cm, while the catching or capturing chamber has a holding capacity or inner volume of about 500 ml.

For insects of larger size, such as Cossus cossus (mean wing span; 65 mm), there are preferred traps with an inlet funnel having an upper diameter of 17.5 cm and a lower diameter of 3.8 cm, and a catching or capturing chamber of 1,500 ml holding capacity.

The slant of the inelt funnel walls, in general, equals 60°, for reason of the ready availability of such funnels on the market. In fact, slants below 60° (down to 30°) would be quite sufficient, due the high slipping characteristics of the coating which hinders an effective grip of the insect on the funnel's walls (see Example 1).

The resistance of the polytetrafluoroethylene coating to washing away has proved to be very high. As an example, the polytetrafluoroethylene coating of a funnel-shaped trap exposed to the open air for four weeks in the period September-October 1982, remained completely unaltered in spite of the fact that in that period there had fallen 50 mm of rain distributed over five precipitations of which two were of a stormy character.

For practical use in agriculture, the traps according to the present invention are used in an analogous way as the similar traps with a funnel uncoated inside or coated with talc or kaolin.

The number of traps per surface unit, and their specific positioning, depend on the species of insect to be captured, on the efficacy of the attractant used, on the climatic and environmental conditions, on the type of cultivation in the involved and surrouding areas, on the type of action to be carried out (monitoring or mass capture) as well as on several other factors, in a manner absolutely similar to that which is considered conventional for the purpose.

Analogously, the traps of the present invention are used according to the normal procedures for the capture of insects, such as flies which infest places frequented by humans or domestic animals and cattle.

The following non-limiting examples are given to illustrate the invention in more detail.

EXAMPLE 1

A number of adult males of _Spodoptera littoralis_ (lepidoptera) were placed on polyethylene plates, some of which had been coated with talc, kaolin or polytetrafluoroethylene.

These plates were then progressively tilted by raising the end in the direction of the insect's head. At an angle of 29°-30° the insect resting on the plate of polytetrafluoroethylene started slipping towards the lower end of the plate. On the talc or kaolin coated plates the insects started slipping downwards at a slant angle of 60°-65°.

On said plates there had, however, become evident scratches left on the coating by the legs of the insects. The uncoated polyethylene plates, on the contrary, offered a hold (grip) to the insects also in a perpendicular position (90°).

EXAMPLE 2

Preparation of pherohormone-baited traps.

The traps were prepared by hermetically and tightly connecting a bottle of the chosen holding capacity and made of plastic material transparent or semitransparent to light, to a polyethylene funnel of suitable size, so that the lower end of the funnel extended well into the inside of the bottle (for a few centimeters (5-7 cm)).

The coating of the inside wall of the funnel with kaolin had been carried out by brushing, on the inside of the funnel, a kaolin suspension (granulometry equal to 1 $\mu$m) in dichloromethane, and allowing the solvent to evaporate in the air.

The traps with funnel inside coated with polytetrafluoroethylene, according to the present invention, were prepared by brush-painting the inside of the funnel with an aqueous suspension of "Algoflon" (registered trademark of MONTEFLUOS Company for polytetrafluorethylene) at a 60% by weight concentration, containing 37% b.w. of water and 3% b.w. of a non-ionic dispersant ("Triton X 100" - registered trademark of Rohm & Haas).

All traps had been equipped with a small circular roof with a diameter about 5-6 cm greater than that of the greater aperture of the funnel, and suspended 3-6 cm above the funnel entrance by metal wires. These same metal wires, extending beyond and above the roof, serve for possibly hanging the traps on special supports or on the branches of trees.

A dispenser of natural rubber imbued with the pherohormone hangs from the center of the small roof and is arranged in such a way as to hang at level with the entrance of greater diameter of the funnel, or suspended inside the funnel itself.

The size of the capturing chamber (bottle) and of the funnel and the type of pherohormone to be used vary in relation to the species of insects taken into consideration, as appears in the following examples from 3 to 6.

EXAMPLE 3

Catching tests on insects of the Cydia molesta species (mean wing span: 11 mm).

There were prepared, following the procedures decribed in Example 2, eight (8) traps of the following characteristics:

volume (holding capacity) of chamber: about 500 ml;

funnel: upper diameter = 10.  cm lower diameter =  2.2 cm.

Four traps were also coated on the inside of the funnel with polytetrafluoroethylene according to the procedures described in Example 2.

Pherohormone dispensers were then prepared by imbuing natural rubber with a mixture of (Z)-8-dodecenyl-acetate (280 $\mu$g), (E)-8-dodecenyl-acetate (20 $\mu$g), dodecanol (1,000 $\mu$g) and (Z)-8-dodecanol (4 $\mu$g).

Said mixture is described as attracting the males of the Cydia molesta species by B.  Sauthanor et al in their book "La Défense des Végétaux" - No. 205, page 247 (1980).

The capturing or catching tests were carried out during the period from September 8 to October 7,  1982, in a commercial peach grove infested naturally.

In addition to the eight traps described herein,  there were also used,  for comparative purposes,  four traps of the glue-type ("Traptest" traps,  registered trademark of MONTEDISON S.p.A.),  equipped with a similar pherohormone dispenser.

The eight traps were placed in a peach orchard,  distanced 30 meters from each other,  and at regular intervals were inverted in their position in a casual way.

The results were surveyed weekly,  counting the number of males of Cydia molesta caught by each trap. At each checking, the glued bottoms of the glue traps were replaced.

The glue traps, during the test period, captured an average of 26.6 males of the species per trap per week.

The funnel traps that had not been treated,  as an average caught 17.5 males of the species per trap per week, while the funnel traps with the inside of the funnel coated with polytetrafluoroethylene according to this invention, had captured an average of 75.2 males of the species per trap per week.

EXAMPLE 4

Catching test on insects of Epichoristodes acerbella species (mean wing span: 18 mm).

Eight traps of the same size as those of Example 3 were prepared. Four of these traps were coated on the funnel inside with polytetrafluoroethylene.

The pherohormone dispensers were imbued with a mixture of: (Z)-11-tetradecenyl-acetate (1,600 $\mu$g), (Z)-9-tetradecenyl-acetate (400 $\mu$g), (Z)-11-tetradecenol (160 $\mu$g) and (Z)-9-tetradecenol (40 $\mu$g).

Said mixture is described by E. Arsura et al in "Atti delle Giornate Fitopatologiche", vol. III, pages 327-332 (1982), as being attractive for the males of the Epichoristodes acerbella species.

The test was carried out over a period from September 24 to November 5, 1982, in a zone typical for floriculture, on carnation growing plots.

For comparative purposes, there were used four "Traptest" glue traps fitted with similar dispensers. On four plots of about 500 sq.mt. there were placed three traps for each plot (one trap per type) and the positions of the traps were periodically changed.

Results of the tests were taken on a weekly basis, counting the number of males of the Epichoristodes acerbella species captured by each trap.

The glue traps, during the test period, as an average captured 12.2 males of the species per trap per week; the funnel traps with untreated funnel wall captured 0.8 males per trap per week as an average, while the traps with a polytetrafluoroethylene treated funnel caught, as an average, 23.0 males per trap per week.

EXAMPLE 5

Test for the capture of insects of the _Autographa gamma_ species (average wing span: 40 mm).

There were prepared, according to the procedures described in Example 2, eight funnel-traps showing the following characteristics:

volume (holding capacity) of capturing chamber: 1,000 ml;

funnel: upper diameter = 12. cm lower diameter = 2.6 cm.

Four (4) of these traps were coated on the inside of the funnel with polytetrafluoroethylene, according to the procedures described in Example 2. Thereupon, there were prepared four dispensers by imbuing natural rubber with: (Z)-7-dodecenyl-acetate (1 $\mu$g). Said substance is described by I. Ghizdavu et al in: "Rev. Roum. Biol.", 24, pages 87-90 (1978), as an attracting agent for males of the _Autographa gamma_ species.

The test was carried out over a period from August 19 to September 16, 1982, on a plot of about 2 hectars, planted with forage leguminosae.

For comparative purposes, there were used four traps of the "Traptest" type, fitted with a similar dispenser. The twelve traps were placed along the perimeter of the plot, distanced about 50 meters from each other, and their posi-

- 13 -

tions were changed periodically in a casual way.

The results were surveyed weekly, counting the number of males of the <u>Autographa gamma</u> species captured by each trap.

During the testing period, the glue traps captured an average of 8.2 males of the species per trap per week; the traps with untreated funnels, on average, captured 4.0 males per trap per week, while the traps with the funnels treated according to the present invention, as an average, captured 14.3 males of the species per trap per week.

<u>EXAMPLE 6</u>

Capturing tests on insects of the <u>Cossus cossus</u> species (mean wing span: 65 mm).

There were prepared, according to the procedures described in Example 2, eight (8) traps having the following characteristics:

volume (holding capacity) of capturing chamber: 1,500 ml;

funnel: upper diameter = 17.5 cm lower diameter = 3.8 cm.

Four (4) of these traps were treated by coating the inside wall of the funnel with polytetrafluoroethylene, according to the procedures followed in Example 2.

Thereupon, the dispensers were prepared by imbuing natural rubber with a mixture of: (Z)-5-dodecenyl-acetate (800 $\mu$g) and (Z)-3-dodecenyl-acetate (200 $\mu$g).

Said mixture has been described as attractant for the males of the <u>Cossus cossus</u> species, in European Patent Application No. 055475 (Montedison S.p.A.). The test was carried out during the period from July 15 to August 5, 1982, in a willow and poplar wood used as a repopulation

- 14 -

zone in an animal farm.

For comparative purposes, there were used four "Traptest" traps fitted with an analogous dispenser. The twelve traps were disposed, at intervals of 50 meters from each other, at the borders of the wood. The positions thereof were periodically inverted in a casual way.

The results were assessed weekly by counting the number of males of Cossus cossus captured by each trap. The glue traps, during the test period, as an average captured 4.3 males of the species per trap per week; the funnel traps with untreated funnel averagely captured 5.2 males of the species per trap per week, while the funnel traps treated according to the invention captured an average of 9.7 males of the species per trap per week.

EXAMPLE 7

Capturing tests on insects of the Musca domestica species. There were prepared traps consisting of a capturing chamber of transparent plastic material, in the shape of a cylindrical vase closed at the top by a truncated cone-like funnel without stem, made of polyethylene, with its larger aperture turned upwards and at levels with the rim of the capturing chamber, while the smaller sized aperture extended into the inside of the capturing chamber.

These traps had the following characteristics:

volume (holding capacity) of capturing chamber: 700 ml;

upper diameter of capturing chamber: 15 cm;

greater diameter of the funnel: 15 cm;

smaller diameter of the funnel: 2.5 cm;

slant of funnel wall: 60°.

Six traps were used for the tests. Of these, two had the

funnel's inside wall coated with talc and two with polytetrafluoroethylene, according to the operating procedures followed in Example 2, while the remaining two traps were left unaltered.

A phagoattracting agent consisting of molasses diluted in a hydro-alcoholic solution with 30% ethyl alcohol was placed inside each trap.

The test was carried out in a suitably conditioned room maintained at a temperature of 23°C ± 1°C, 75 ± 5% of relative humidity and the room was illuminated by fluorescent tubes (2,500 lux). The photoperiod was 16 hours.

The six traps were placed in said room and into it were then let loose 200 insects of Musca domestica (50% males) and 50% females).

The duration of the test amouned to seven days. At the end of each test day, the insects not captured were eliminated, the number of insects captured in each trap was counted, and into the room were introduced a further 200 insects of the species.

Over the test period, the traps with the untreated funnel had captured an average of 11.1 insects per trap per day; the traps with the funnels coated inside with talc had captured an average of 17.9 insects per trap per day, while the traps treated according to the present invention averaged 47 insects captured per trap per day.

CLAIMS:

1.  A trap for insects comprising a capturing chamber and e.g. truncated-cone shaped or funnel-like entrance means arranged vertically with respect to the capturing chamber preferably with its smaller diameter turned toward and communicating with the inside of the capturing chamber, said trap being provided with an attracting agent for insects, characterized in that the inner wall of the entrance means is preferably uniformly coated with polytetrafluoroethylene.

2.  A trap according to claim 1, wherein the attracting agent for insect is a pherchormone or a phagoattractant.

3.  A trap according to anyone of the preceding claims wherein the capturing chamber is provided with an insecticide or an aqueous solution of a surfactant.

4.  A trap according to anyone of the preceding claims, wherein the truncated-cone shaped or funnel-like entrance means is made of polyethylene.

5.  Use of traps according to one or more of the claims 1-4 for the assessment of the course and degree of infestation of a given area.

6.  Use of traps according to one or more of the claims 1-4 for the capture in bulk of insects.

7.  A truncated-cone shaped or funnel-like entrance means for use with a capturing chamber for insects, characterized in that the inner walls are preferably uniformly coated with polyfluoroethylene.

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| X | US-A-4 263 740 (W.L.H. HEMSARTH, H.E. RIFE) * Column 3, lines 11-23; figure 2 * | 1-7 | A 01 M 1/10 A 01 M 1/02 |
| | --- | | |
| A | GB-A-2 052 942 (UNILEVER LTD.) | | |
| | ----- | | |

TECHNICAL FIELDS SEARCHED (Int. Cl 4)

A 01 M

The present search report has been drawn up for all claims

| Place of search | Date of completion of the search | Examiner |
|---|---|---|
| THE HAGUE | 29-11-1984 | NEHRDICH H.J |